# EUROPÄISCHE PATENTANMELDUNG

(11) **EP 2 520 958 A2**
(43) Veröffentlichungstag der Anmeldung: **07.11.2012**
(21) Anmeldenummer: 12166380.1
(22) Anmeldetag: 02.05.2012
(51) Int. Cl.: G02B 6/42, G02B 6/32

(54) **Verfahren und Vorrichtung zur Grundjustage eines Faserkopplers**

(30) Priorität: 04.05.2011 DE 102011050079
(71) Anmelder: Askion GmbH, 07549 Gera (DE)
(72) Erfinder: Schlüter, Hans, 04157 Leipzig (DE); Zimmermann, René, 04157 Leipzig (DE)
(74) Vertreter: Oehmke, Volker

(57) **Zusammenfassung**

Verfahren und Vorrichtung zur Durchführung einer Grundjustage eines Faserkopplers, bei dem ein Strahlenbündel (3) einer elektromagnetischen Strahlung durch ein optisches, fokussierendes Element (2) entlang einer ersten optischen Achse (4) in einen Fokus (5) auf einer Stirnfläche einer als Lichtwellenleiter fungierenden optischen Faser (6) fokussiert und über die Stirnseite gleichmäßig und verlustarm entlang einer zweiten optischen Achse (7) eingekoppelt wird. Der Durchmessers des Strahlenbündels (3) auf der Stirnfläche der Faser(5) wird durch das Einbringen eines wenigstens teil-transparenten, defokussierenden Elementes (8) in den Strahlengang des Strahlenbündels (3) zwischen fokussierendem Element (2) und Stirnfläche (6.1) der optischen Faser (6) vergrößert, in einer Ebene (5.1) verschoben und durch das Entfernen des defokussierenden Elementes (8) aus dem Strahlengang des Strahlenbündels (3) wieder reduziert.

## Beschreibung

Die Erfindung betrifft ein Verfahren zur schnellen und einfachen Grundjustage von Faserkopplern. Die Erfindung betrifft weiterhin eine Vorrichtung zur Grundjustage von Faserkopplern, wie sie gattungsgemäß aus der DE 689 22 789 T2 bekannt ist.

Faserkoppler sind optomechanische Einheiten, die eine optische und mechanische Schnittstelle für Freistrahllaser haben und durch die das Licht des Freistrahllasers (fortan als elektromagnetische Strahlung oder kurz als Strahlung bezeichnet) in einen Lichtwellenleiter eingekoppelt wird. Dies geschieht, indem die Strahlung auf eine Stirnfläche des Lichtwellenleiters, und zwar auf den zentral gelegenen Kern des Lichtwellenleiters, fokussiert wird. Bei Monomode-Fasern für die Leitung von Strahlung im sichtbaren Spektralbereich sind die Kerndurchmesser der Fasern sowie die Durchmesser des Fokus kleiner als 10 µm. Die Überdeckung von Fokus und Kern der Faser sollte für eine stabile Einkopplung der Strahlung mindestens 90% betragen.

Diese Faserkoppler werden mittels Präzisionsverstelleinheiten justiert. Ziel ist es, eine möglichst hohe Einkoppeleffizienz durch eine optimale Überdeckung von Fokus und Kern der Faser (Faserkern) einzustellen, um ein Maximum an Strahlungsleistung in die Faser einzukoppeln.
Die Faserkoppler enthalten bewegliche optomechanische Einheiten als Justierglieder. Durch deren Translation und/oder Taumeln werden die Faserkoppler justiert. Zunächst erfolgt eine Grundjustage.

Unter dem Begriff der Grundjustage ist nachfolgend zu verstehen, dass ein detektierbares Maß an Strahlungsleistung in den Faserkern eingekoppelt wird. Anschließend ist in der Regel eine Feinjustage notwendig, durch welche eine maximale Strahlungseinkopplung angestrebt wird.

Die Grundjustage ist bei den bekannten Faserkopplern nur aufwändig und/oder schwer einzustellen, wenn diese z. B. wegen eines Austausches des Lasers oder der optischen Faser nicht mehr gegeben ist.

Die Justierglieder lassen eine Verstellung des Justiergliedes in einem weiten Bereich zu. Im Verhältnis zur Größe dieses Justierbereiches ist die Stirnfläche der Faser und erst recht des Kerns der Faser sehr klein.

Es ist eine äußerst zeitaufwändige Tätigkeit, diesen sehr kleinen Bereich zu bestimmen, d.h. den Strahlengang der Strahlung so auf den Kern der Faser zu richten, dass eine Strahlungsleistung detektierbar ist. Ungeübte und ungeduldige Bediener haben bei der Grundjustage eines Faserkopplers oft keinen Erfolg. Selbst für Fachkräfte ist die Herstellung der Grundjustage ein zeitaufwändiger Prozess. Diese Faktoren können zu erhöhten Service-Kosten, Support-Kosten oder zu Unzufriedenheit des Benutzers führen.

Die auf dem Markt derzeit verfügbaren Faserkoppler haben keine Justierhilfe für die Grundjustage, die ohne eine Demontage von optischen oder mechanischen Komponenten angewendet werden kann.

Zur Grundjustage des Laserstrahlkopplers 60SMS der Firma Schäfter + Kirchhoff (Hamburg) wird statt des Laserstrahlkopplers zunächst eine Aperturblende verwendet und die durch die Aperturblende durchtretende Strahlungsleistung gemessen (www.suk-hamburg.de/download/lsk60sms_d.pdf, Seite 4, 17. März 2010). Durch x-y-Verschiebung der Aperturblende wird die Position mit der höchsten messbaren Strahlungsleistung ermittelt, wodurch die Ausgangsposition des Laserstrahlkopplers für eine anschließende Feinjustage festgelegt ist. Die Grundjustage erfolgt also nicht mit dem tatsächlich in der Vorrichtung verwendetem Bauteil, hier dem Laserstrahlkoppler, sondern mit einem anderen Bauteil. Nach der Ermittlung der oben genannten Position ist ein Austausch der Bauteile Aperturblende und Laserstrahlkoppler erforderlich. Dadurch kann es zu erneuten Dejustierungen des Systems durch mechanische Einflüsse während des Austausches und durch Fertigungstoleranzen der Bauteile kommen.

Aus der Patentliteratur, beispielsweise aus der DE 689 22 789 T2 (EP 0 348 117 B1), ist das Prinzip des "aufgeweiteten Strahls" bekannt. Nach diesem Prinzip wird der Kerndurchmesser eines Strahlenbündels in einer optomechanischen Kopplungsvorrichtung, wie einem Faserkoppler, durch geeignete optische Elemente von 100 µm auf Durchmesser von wenigen mm aufgeweitet. Eine größere Querschnittsfläche des Strahlenbündels bewirkt eine Reduzierung der Dichte der Strahlungsleistung, wodurch die Übertragung hoher Strahlungsleistungen in der Kopplungsvorrichtung ermöglicht wird, ohne dass es zu überhöhten Energiekonzentrationen an den Oberflächen der beteiligten Elemente kommt. Ein weiterer Vorteil ist, dass kleinste Verunreinigungen auf den Oberflächen der optischen Elemente weder eine stark abschattende Wirkung entfalten können, noch durch die Strahlung verbrannt, oder gar in die Oberflächen eingebrannt, werden.

In der Lösung nach der DE 689 22 789 T2 sind an jedem der einander zugewandten Enden zweier optischen Fasern defokussierende oder abbildende optische Elemente vorhanden. Nach einer Grundjustage der Kopplungsvorrichtung verbleiben die defokussierenden oder abbildenden optischen Elemente auch während eines dauerhaften Betriebszustandes im Strahlengang des Strahlenbündels.

Die Grundjustage erfolgt, indem ein optisches Signal (Strahlenbündel) von einer Testquelle entlang des Strahlenganges gesendet und durch einen Detektor empfangen wird, der mit derjenigen optischen Faser verbunden ist, in die das Strahlenbündel eingekoppelt werden soll. Durch Verstellen von Schrauben mit einem groben Gewinde können die optische Faser mit ihren defokussierenden oder die abbildenden optischen Elementen grob zueinander ausgerichtet werden. Nach dem Auffinden einer Position, in der eine gewünschte Signalstärke empfangen wird, ist die Grundjustage beendet. Es kann sich eine Feinjustage anschließen.

Nachteilig an einer solchen Lösung ist, dass die Vorrichtung jedenfalls mit einem aufgeweiteten Strahl betrieben werden muss. Eine Einkopplung der Strahlung mittels eines fokussierten Strahls ist nicht möglich, da die defokussierenden Elemente, die zugleich als Justierhilfen wirken, in der Kopplungsvorrichtung verbleiben.

Der Erfindung liegt die Aufgabe zugrunde, eine Möglichkeit zur vereinfachten Erzielung einer Grundjustage eines Faserkopplers vorzuschlagen. Es ist ferner eine der Erfindung zugrunde liegende Aufgabe, eine Vorrichtung vorzuschlagen, mit der eine vereinfachte Grundjustage von Faserkopplern ermöglicht wird.

Die Aufgabe wird durch ein Verfahren zur Grundjustage eines Faserkopplers gelöst, bei dem ein Strahlenbündel einer elektromagnetischen Strahlung durch ein optisches, fokussierendes Element entlang einer ersten optischen Achse in einen Fokus auf einer Stirnfläche einer als Lichtwellenleiter fungierenden optischen Faser fokussiert wird, um über die Stirnfläche gleichmäßig und verlustarm entlang einer zweiten optischen Achse der optischen Faser eingekoppelt zu werden, mit der Folge von Schritten:
- des Verschiebens des Fokus in Richtung der ersten optischen Achse durch das Einbringen eines zumindest teiltransparenten, defokussierenden Elementes in den Strahlengang des Strahlenbündels, derart, dass das Strahlenbündel auf der Stirnfläche der optischen Faser, im Vergleich zu einem nicht verschobenen Fokus vergrößert, abgebildet wird,
- des Detektierens einer in die optische Faser eingekoppelten Strahlungsleistung des Strahlenbündels;
- des Verschiebens des Fokus in einer Fokusebene, solange, bis eine Position des Fokus gefunden ist, bei der die detektierte Strahlungsleistung einen vorbestimmten Wert erreicht und
- des Entfernens des defokussierenden Elementes aus dem Strahlengang des Strahlenbündels.

Nachfolgend wird der Begriff "defokussierend" im Sinne einer Vergrößerung des Durchmessers des Strahlenbündels, insbesondere im Sinne einer Vergrößerung einer Abbildung des Strahlenbündels auf der Stirnfläche der optischen Faser, verwendet. Dabei sind alle optischen Wirkungen des defokussierenden Elementes umfasst, durch welche ein Fokuswinkel, unter dem die Strahlung durch das fokussierende Element in den Fokus gerichtet ist, so verändert wird, dass es zu einer Vergrößerung des Durchmessers des Strahlenbündels kommt.

Insbesondere ist unter "defokussierend" eine Verschiebung des Fokus in Strahlausbreitungsrichtung entlang der ersten optischen Achse und in Richtung der optischen Faser infolge des Einbringens eines zusätzlichen optischen Elementes zu verstehen. Durch diese Verschiebung des Fokus ergibt sich zwangsläufig auf der Stirnfläche der optischen Faser eine vergrößerte, unscharfe Abbildung des Strahlenbündels. Die Abbildung kann rund oder, bei geneigter Stirnfläche, oval sein. Eine sich orthogonal zur ersten optischen Achse erstreckende Stirnfläche liegt in der Fokusebene. Eine zur ersten optischen Achse geneigte Stirnfläche wird in einem Bereich von der Fokusebene durchdrungen.

Kern der Erfindung ist die Bereitstellung eines vergrößerten Strahlenbündels über die Zeitdauer der Grundjustage eines Faserkopplers durch ein reversibel in den Strahlengang eingebrachtes defokussierendes Element.

Die Vergrößerung des Durchmessers des Strahlenbündels auf der Stirnfläche der optischen Faser durch das defokussierende Element erfolgt um einen Faktor von mindestens 3, wobei die Vergrößerung in bevorzugten Ausführungen mindestens 10 beträgt. Durch eine solche Vergrößerung wird in vorteilhafter Weise der Umstand ausgenutzt, dass die Fläche des Strahlenbündels quadratisch mit der Zunahme des Durchmessers des Strahlenbündels ansteigt. Eine Vergrößerung des Durchmessers um einen Faktor von 10 lässt die Fläche des Strahlenbündels auf der Stirnfläche der Faser auf das 100fache anwachsen. Damit erhöht sich in äußerst vorteilhafter Weise die Wahrscheinlichkeit, dass ein Bediener in einer bestimmten Zeit eine Position des Fokus auffindet, bei der überhaupt erst eine Strahlungsleistung in der optischen Faser detektiert werden kann.
Von dieser Position ausgehend kann systematisch, durch Verschieben des Fokus in der Fokusebene, nach einer weiteren Position gesucht werden, an der die Strahlungsleistung der in die optische Faser eingekoppelten Strahlung einen vorbestimmten Wert erreicht. Vorzugsweise ist der vorbestimmte Wert ein Mindestwert der Strahlungsleistung, bei dem eine Einkopplung in die optische Faser detektierbar ist.

Das defokussierende Element kann in den Strahlengang eingeschoben, in diesen eingeklappt oder in einer sonstigen geeigneten Weise eingebracht werden.

Durch das defokussierende Element wird eine Verschiebung des Brennpunktes des fokussierten Strahlenbündels in Strahlausbreitungsrichtung erreicht. Der Brennpunkt liegt während eines Betriebszustandes des Faserkopplers nahe der Stirnfläche der optischen Faser. Durch eine Defokussierung des Strahlenbündels wird der Brennpunkt hinter die Fokusebene verlagert. Wird die Strahlung des Strahlenbündels durch das defokussierende Element parallelisiert oder gar in divergierende Strahlung überführt, so wird der Brennpunkt ins Unendliche verschoben bzw. es existiert kein Brennpunkt.
Das Verschieben des Strahlenbündels in der Ebene der Stirnfläche der Faser erfolgt durch eine kontrollierte Lageveränderung des Strahlenganges des Strahlenbündels, einer Lageänderung der optischen Faser oder einer Kombination dieser Lageänderungen. Die in die optische Faser eingekoppelte Strahlungsleistung wird während der Grundjustage durch geeignete Mittel detektiert und die Information über die detektierte eingekoppelte Strahlungsleistung für den Durchführenden des Verfahrens (Bediener) zur Verfügung gestellt.

Nachdem diejenige Position des Fokus gefunden ist, in der eine eingekoppelte Strahlung in der optischen Faser detektierbar ist, wird der Durchmesser des Strahlenbündels durch das Entfernen des defokussierenden Elementes aus dem Strahlengang des Strahlenbündels auf seinen eigentlichen, für einen dauerhaften Betrieb vorgesehenen, Durchmesser reduziert. Das Entfernen kann manuell oder maschinell erfolgen.

Es ist natürlich auch möglich, dass die Folge von Schritten des Verfahrens mehrfach nacheinander wiederholt wird, wobei die Vergrößerung des Durchmessers des Fokus in jeder Wiederholung neu gewählt sein kann.

Mit einer Auswahl verschiedener Durchmesser des Strahlenbündels nach einer erfolgten Detektion einer Strahlungsleistung kann unmittelbar zu einer Feinjustage übergegangen werden. In einer vorteilhaften Ausführung des erfindungsgemäßen Verfahrens kann die gewählte Vergrößerung sukzessive verringert werden, wodurch eine zunehmend bessere Justage erreicht werden kann. Es ist ferner möglich, die Folge von Schritten mit gleichen oder aber erhöhten Vergrößerungen der Strahlbündeldurchmesser durchzuführen.

Es ist ein großer Vorteil des erfindungsgemäßen Verfahrens, dass die Grundjustage mit dem fokussierenden Element sowie der optischen Faser durchgeführt wird, die während des Betriebes der Vorrichtung tatsächlich auch angeordnet und betrieben werden.
Es entfallen also nach erfolgter Grundjustage jedweder Austausch von, oder Manipulation an, dem fokussierenden Element sowie der optischen Faser.

Die Aufgabe wird ferner bei einer Vorrichtung zur Grundjustage eines Faserkopplers, bei dem ein Strahlenbündel einer elektromagnetischen Strahlung durch ein optisches, fokussierendes Element entlang einer ersten optischen Achse auf einen Fokus auf einer Stirnfläche einer als Lichtwellenleiter fungierenden optischen Faser fokussiert ist, dadurch gelöst,
- dass ein für die Strahlung des Strahlenbündels wenigstens teiltransparentes, defokussierendes Element vorhanden ist, welches reversibel in den Strahlengang des Strahlenbündels einzubringen ist und durch dessen Wirkung der Durchmesser einer Abbildung des Strahlenbündels auf der Stirnfläche der optischen Faser um einen Faktor von mindestens 3 vergrößert wird.

In einer vorteilhaften Ausführung der erfindungsgemäßen Vorrichtung ist das fokussierende Element aus mindestens einem fokussierende optischen Bauteil und einem nachgeordneten schwach brechenden Element aufgebaut. Vorteilhaft ist es möglich, das schwach brechende Element unabhängig von dem fokussierenden optischen Bauteil verstellbar auszuführen. Stark fokussierende Elemente weisen sehr hohe Positionsempfindlichkeit auf. Diesem Umstand, der eine Justage erschwert, kann durch Verstellen lediglich des schwach brechenden Elements Rechnung getragen werden.

Das defokussierende Element weist entlang der ersten optischen Achse Oberflächen auf, die aus einer Gruppe umfassend zueinander planparallele, plankonvexe, plankonkave, bikonvexe und bikonkave gestaltete Oberflächen ausgewählt sind. Die defokussierende Wirkung kann also durch eine Reihe verschiedener Gestaltungen bewirkt werden, wodurch sich vorteilhaft ein hoher Grad an Anpassungsmöglichkeiten an verschiedene Ausführungen der erfindungsgemäßen Vorrichtung und deren Einsatzbedingungen ergibt.

Das Material des defokussierenden Elementes ist vorzugsweise ein Glas mit geeigneter optischer Qualität, es kann jedoch auch aus Kunststoff, Verbünden von Kunststoffen, Verbünden von Glas und/oder Kunststoffen, geeigneten kristallinen Stoffen oder aus anderen, für den Wellenlängenbereich transparenten, Materialien bestehen.
Ferner können auch beugende Elemente wie Hologramme oder konzentrische Gitter defokussierende Elemente sein.

Es ist eine äußerst vorteilhafte Ausführung der erfindungsgemäßen Vorrichtung, wenn das defokussierende Element in einer Fassung gefasst und in einer Halterung gehaltert ist, wodurch es wiederholt, reversibel und reproduzierbar in den Strahlengang des Strahlenbündels eingebracht werden kann. Eine Halterung kann in einem Gehäuse des Faserkopplers dauerhaft vorhanden, z. B. unlösbar mit dem Gehäuse verbunden, sein. Es ist auch möglich, dass die Halterung lösbar an dem Gehäuse des Faserkopplers befestigt ist. Möglich ist ferner eine Nachrüstung bestehender Faserkoppler mit einer Halterung. Es ist außerdem möglich, dass das defokussierende Element ohne Fassung ausgeführt ist.

Das defokussierende Element ist vorzugsweise mit einer mechanischen Vorrichtung verbunden, durch die das defokussierende Element reversibel in den Strahlengang des Strahlenbündels eingebracht werden kann. Die mechanische Vorrichtung kann manuell und/oder maschinell, z. B. mechanisch, elektromechanisch, pneumatisch oder hydraulisch, zu betätigen sein.

Es ist ferner im Rahmen der Erfindung liegend, wenn in dem Strahlengang ein defokussierendes Element vorhanden ist, das aus einer Gruppe von defokussierenden Elementen ausgewählt ist, von denen jedes den Durchmesser des Strahlenbündels auf der Stirnfläche der Faser um einen bestimmten Faktor vergrößert.

In einer weiteren Ausführung der erfindungsgemäßen Vorrichtung sind in dem Strahlengang des Strahlenbündels mehrere defokussierende Elemente vorhanden, von denen jedes den Durchmesser des Strahlenbündels auf der Stirnfläche um einen bestimmten Wert vergrößert. Es können defokussierende Elemente verschiedener Oberflächengestaltung und aus verschiedenen Materialien sowie mit verschiedenen bewirkten Vergrößerungen vorhanden und miteinander kombiniert sein. Verschiedene defokussierende Elemente können auch als Verbund zu einem defokussierenden Element zusammengefasst sein.

Die Grundjustage nach dem erfindungsgemäßen Verfahren und mittels einer erfindungsgemäßen Vorrichtung erfolgt, indem der Strahlengang des Strahlenbündels in Richtung der Stirnfläche der optischen Faser gerichtet wird. Das defokussierende Element wird in den Strahlengang eingebracht. Durch Verschieben des nun vergrößerten Durchmessers des Strahlenbündels in der Fokusebene wird eine Position von fokussierendem Element und Stirnfläche der optischen Faser bestimmt, in der eine Strahlungsleistung in der optischen Faser detektierbar ist. Das defokussierende Element wird anschließend aus dem Strahlengang entfernt.
Bei Bedarf wird der Vorgang mit einem weiteren defokussierendem Element wiederholt, das so gestaltet ist, dass der Strahlbündelquerschnitt eine andere, insbesondere eine geringere, Vergrößerung erfährt. Eine solche Vorgehensweise ist insbesondere bei stark dejustierten Faserkopplern angebracht und kann als Feinjustage an die Grundjustage angeschlossen werden.
Es kann sich auch eine andere Art der Feinjustage des Faserkopplers anschließen.

Mit dem erfindungsgemäßen Verfahren und der erfindungsgemäßen Vorrichtung ist eine schnelle, zuverlässige und einfache Grundjustage eines Faserkopplers auch für unerfahrene Bediener möglich. Es ist weiterhin sehr günstig, dass die Grundjustage unter Anwesenheit aller tatsächlich für den Betrieb der Vorrichtung benötigten Elemente durchführbar ist und keine dieser tatsächlich benötigten Elemente nach der Grundjustage ausgetauscht werden müssen. Es ist ferner in vorteilhafter Weise möglich, bereits bestehende Faserkoppler zur reversiblen Aufnahme eines defokussierenden Elementes nachzurüsten.

Die Erfindung wird nachfolgend anhand von Ausführungsbeispielen und Abbildungen näher erläutert. Dabei zeigen:
- Fig. 1: eine schematische Darstellung eines ersten Ausführungsbeispiels einer erfindungsgemäßen Vorrichtung ohne ein defokussierendes Element und
- Fig. 2: eine schematische Darstellung eines ersten Ausführungsbeispiels der erfindungsgemäßen Vorrichtung mit einem defokussierenden Element.

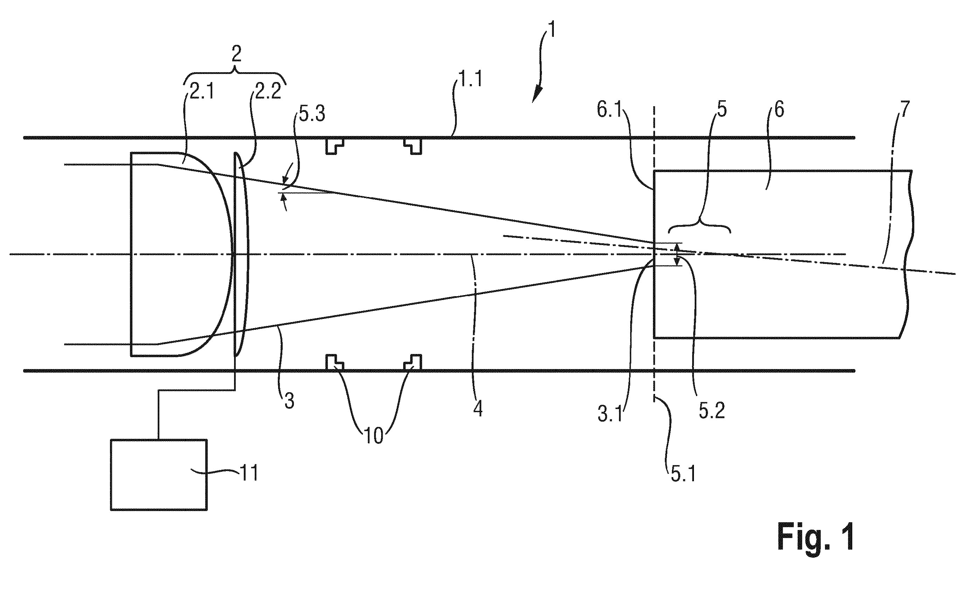

In einem ersten Ausführungsbeispiel sind gemäß Fig. 1 als wesentliche Elemente eines Faserkopplers 1 ein fokussierendes Element 2, ein entlang einer ersten optischen Achse 4 ausgesendetes und in einen Fokus 5 gerichtetes Strahlenbündel 3, eine Halterung 10 sowie eine optische Faser 6 (Monomode) mit einer zweiten optischen Achse 7 gezeigt.

Bei einer Abbildung 3.1 des Strahlenbündels 3 in einer Fokusebene 5.1 auf einer dem fokussierenden Element 2 zugewandten Stirnfläche 6.1 der optischen Faser 6 weist die Abbildung 3.1 einen Durchmesser 5.2 auf. Über die Stirnfläche 6.1 ist die Strahlung des Strahlenbündels 3 in die optische Faser 6 einkoppelbar.

Die Strahlung des Strahlenbündels 3 wird durch eine Laserstrahlquelle (nicht gezeigt) bereitgestellt und über einen Freistrahl zum Faserkoppler 1 übertragen.

In weiteren Ausführungen kann ein Lichtwellenleiter als Strahlquelle vorgesehen sein. Der Freistrahl kann ferner ein Laserstrahl direkt aus einer Laserstrahlquelle sein.

Das fokussierende Element 2 ist ein Linsensystem, durch welches die Strahlung unter einem ersten Fokuswinkel 5.3, illustriert als der Winkel zwischen erster optischer Achse 4 und den Randstrahlen des Strahlenbündels 3, in den Fokus 5 gerichtet ist. Der Fokus 5 ist ein Bereich entlang der ersten optischen Achse 4, der durch Strahltaillen (nicht gezeigt) des Strahlenbündels 3 gegeben ist. Das fokussierende Element 2 umfasst ein fokussierendes optische Bauteil 2.1 und ein nachgeordnetes, schwach brechendes Element 2.2.

Mit dem schwach brechenden Element 2.2 ist eine Verstelleinrichtung 11 verbunden, mittels der das schwach brechende Element 2.2 relativ zum Strahlengang verstellbar und insbesondere verkippbar ist, wodurch die Lage und Richtung der ersten optischen Achse 4 kontrolliert verstellt werden können.

An einer Wand 1.1 des Faserkopplers 1 sind zwischen dem fokussierenden Element 2 und der optischen Faser 6 Halterungen 10 so angeordnet und ausgebildet, dass diese nicht in den Strahlengang des Strahlenbündels 3 hineinragen.

In weiteren Ausführungen der Vorrichtung kann eine andere elektromagnetische Strahlung vorhanden sein. Weiterhin kann das fokussierende Element 2 z. B. eine magnetische Linse, ein diffraktives optisches Element, ein Hologramm, eine GRIN-Linse, eine Zylinderlinse, eine Asphäre oder eine Kombination aus diesen Elementen sein.
Sind die Strahlen des Strahlenbündels 3 als parallele Strahlen bereitgestellt, kann das defokussierende Element 8 auch vor dem fokussierenden Element 2 angeordnet sein.

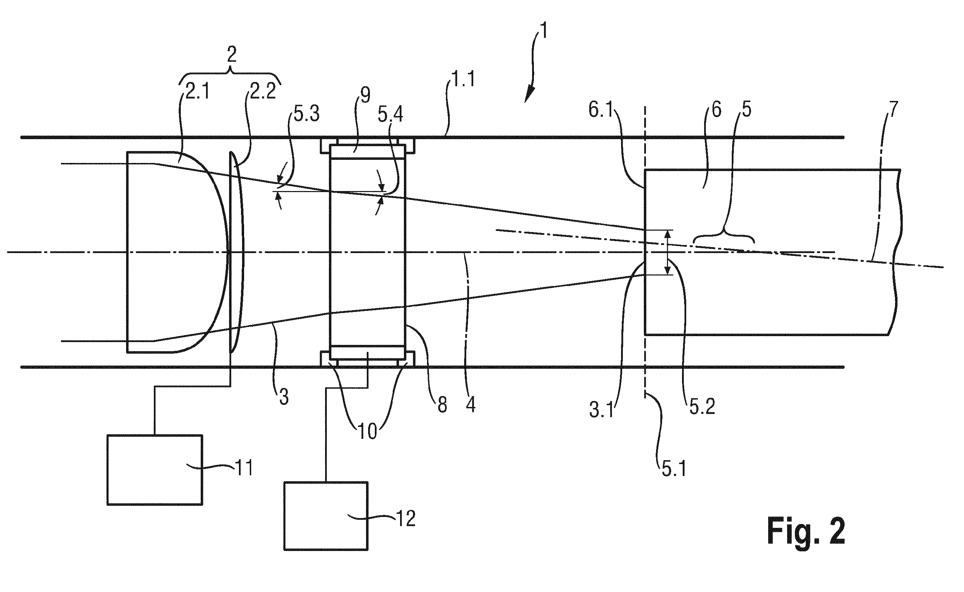

In der Fig. 2 ist das in Fig. 1 beschriebene erste Ausführungsbeispiel der erfindungsgemäßen Vorrichtung mit einem, in den Strahlengang des Strahlenbündels 3 eingesetzten und als planparallele Platte gestalteten, defokussierenden Element 8 gezeigt. Das defokussierende Element 8 ist mit einer Fassung 9 gefasst und so dimensioniert, dass es in die Halterung 10 einschiebbar ist. Das eingeschobene defokussierende Element 8 ist mit der Halterung 10 über die Fassung 9 formschlüssig verbunden. Das defokussierende Element 8 steht weiterhin über die Fassung 9 mit einer mechanisch wirkenden Vorrichtung 12 in Verbindung, durch die das defokussierende Element 8 in die Halterung 10 einschiebbar und aus dieser wieder herausnehmbar ist.

In weiteren Ausführungen kann das defokussierbare Element 8 auch einschwenkbar ausgebildet sein.

Das Strahlenbündel 3 trifft nach dem Durchlaufen des fokussierenden Elements 2 mit dem ersten Fokuswinkel 5.3 auf die freie Oberfläche des defokussierenden Elements 8, wo das Strahlenbündel 3 gebrochen wird. Während des Durchgangs des Strahlenbündels 3 durch das defokussierende Element 8 weist das Strahlenbündel 3 einen zweiten Fokuswinkel 5.4 auf, der geringer als der erste Fokuswinkel 5.3 ist. An der dem fokussierenden Element 2 abgewandten Oberfläche des defokussierenden Elements 8 wird das Strahlenbündel 3 wiederum gebrochen und breitet sich unter dem ersten Fokuswinkel 5.3 weiter aus. Durch die abschnittsweise Verringerung des ersten Fokuswinkels 5.3 ist der Fokus 5 entlang der ersten optischen Achse 4 verschoben, so dass der Durchmesser 5.2 des Strahlbündels 3 auf der Stirnfläche 6.1 der optischen Faser 5.2 größer als in einer Ausführung gemäß der Fig. 1 ist.
Die Vergrößerung des Durchmessers 5.2 erfolgt beispielsweise mit einem Faktor 10 von 6 µm auf 60 µm. Der Flächeninhalt des Durchmessers 5.2 steigt dadurch von rund 30 µm² auf rund 3000 µm² an.

In weiteren Ausführungen der erfindungsgemäßen Vorrichtung, bei denen das defokussierende Element 8 nicht planparallele Oberflächen aufweist, kann sich das Strahlenbündel 3 nach dem Durchgang unter einem Winkel ungleich dem ersten Fokuswinkel 5.3 weiter ausbreiten.

Um mit der in den Fig. 1 und 2 gezeigten Vorrichtung eine Grundjustage durchzuführen, wird das fokussierende Element 2 so ausgerichtet, dass die erste optische Achse 4 in Richtung der Stirnfläche 6.1 weist. Wird danach bereits eine Strahlungsleistung in der optischen Faser 6 detektiert, kann nachfolgend mit einem defokussierenden Element 8 mit geringer Vergrößerung gearbeitet werden oder es wird direkt zur Feinjustage übergegangen. Ist keine Strahlungsleistung detektierbar, wird ein defokussierendes Element 8 in die Halterung 10 eingeschoben. Durch ein Ansteuern der Verstelleinrichtung 11 wird systematisch das Strahlenbündel 3 über die Fokusebene 5.1 geführt, bis eine Strahlungsleistung in der optischen Faser 6 detektiert wird. Die Information über die detektierte Strahlungsleistung wird für einen Bediener auf einem Display (nicht dargestellt) angezeigt oder visuell bewertet. Das defokussierende Element 8 wird nun aus der Halterung 10 entfernt und die detektierbare Strahlungsleistung in der optischen Faser 6 bestimmt. Entspricht diese den Anforderungen an eine Grundjustage, kann zu diesem Zeitpunkt oder später zur Feinjustage übergegangen werden. Die Grundjustage ist damit beendet.

An die beschriebene Grundjustage kann sich eine Feinjustage anschließen. Durch weiteres Verschieben des Strahlbündels 3 auf der Stirnfläche 6.1 der optischen Faser 6 wird diejenige Position des Strahlbündels 3, und damit der Lage der ersten optischen Achse 4, gesucht, bei der die detektierte Strahlungsleistung am größten ist. Dies wird dann der Fall sein, wenn erste optische Achse 4 und zweite optische Achse 7 so weit als möglich zusammenfallen.
Das defokussierende Element 8 kann gegen ein anderes defokussierendes Element 8 mit einer geringeren Fokusverschiebung ausgetauscht werden. Die oben genannten Schritte werden wiederholt, bis die in der optischen Faser 6 detektierte Strahlungsleistung den Anforderungen an eine Feinjustage entspricht.

Die Erfindung kann in allen Bereichen der Technik, z.B. bei der Datenübertragung oder in der Laserbearbeitung, angewandt werden, in denen Strahlung über Faserkoppler zwischen verschiedenen optischen Elementen gekoppelt werden muss. Besondere Bedeutung hat die Erfindung für eine schnelle, einfache und trotzdem zuverlässige Grundjustage von neu gefertigten Komponenten oder aber nach Reparaturen und Instandsetzungen von entsprechenden Anlagen.

### Bezugszeichenliste

- 1: Faserkoppler
- 1.1: Wand
- 2: fokussierendes Element
- 2.1: fokussierendes optisches Bauteil
- 2.2: schwach brechendes Element
- 3: Strahlenbündel
- 3.1: Abbildung
- 4: erste optische Achse
- 5: Fokus
- 5.1: Fokusebene
- 5.2: Durchmesser
- 5.3: erster Fokuswinkel
- 5.4: zweiter Fokuswinkel
- 6: optische Faser
- 6.1: Stirnfläche
- 7: zweite optische Achse
- 8: defokussierendes Element
- 9: Fassung
- 10: Halterung
- 11: Verstelleinrichtung
- 12: mechanische Vorrichtung

## Patentansprüche

1. Verfahren zur Grundjustage eines Faserkopplers, bei dem ein Strahlenbündel einer elektromagnetischen Strahlung durch ein optisches, fokussierendes Element entlang einer ersten optischen Achse in einen Fokus auf einer Stirnfläche einer als Lichtwellenleiter fungierenden optischen Faser fokussiert wird, um über die Stirnfläche gleichmäßig und verlustarm entlang einer zweiten optischen Achse der optischen Faser eingekoppelt zu werden, mit der Folge von Schritten:
- des Verschiebens des Fokus (5) in Richtung der ersten optischen Achse (4) durch das Einbringen eines zumindest teil-transparenten, defokussierenden Elementes (8) in den Strahlengang des Strahlenbündels (3), derart, dass das Strahlenbündel (3) auf der Stirnfläche der optischen Faser (6), im Vergleich zu einem nicht verschobenen Fokus (5) vergrößert, abgebildet wird,
- des Detektierens einer in die optische Faser (6) eingekoppelten Strahlungsleistung des Strahlenbündels (3);
- des Verschiebens des Fokus (5) in einer Fokusebene (5.1), solange, bis eine Position des Fokus (5) gefunden ist, bei der die detektierte Strahlungsleistung einen vorbestimmten Wert erreicht und
- des Entfernens des defokussierenden Elementes (8) aus dem Strahlengang des Strahlenbündels (3).

2. Verfahren nach Anspruch 1, **dadurch gekennzeichnet, dass** ein Durchmesser (5.2) des Strahlbündels (3) auf der Stirnfläche (6.1) der optischen Faser (6) durch die Wirkung des defokussierenden Elements (8) um einen Faktor von mindestens 3 vergrößert wird.

3. Verfahren nach Anspruch 1, **dadurch gekennzeichnet, dass** die Folge von Schritten des Verfahrens mehrfach nacheinander wiederholt wird, wobei die Vergrößerung des Durchmessers (5.2) in jeder Wiederholung neu gewählt wird.

4. Vorrichtung zur Grundjustage eines Faserkopplers, bei dem ein Strahlenbündel einer elektromagnetischen Strahlung durch ein optisches, fokussierendes Element entlang einer ersten optischen Achse auf einen Fokus auf einer Stirnfläche einer als Lichtwellenleiter fungierenden optischen Faser fokussiert ist, **dadurch gekennzeichnet,**
- **dass** ein für die Strahlung des Strahlenbündels (3) wenigstens teiltransparentes, defokussierendes Element (8) vorhanden ist, welches reversibel in den Strahlengang des Strahlenbündels (3) einzubringen ist und durch dessen Wirkung der Durchmesser (5.2) einer Abbildung (3.1) des Strahlenbündels (3) auf der Stirnfläche (6.1) der optischen Faser (6) um einen Faktor von mindestens 3 vergrößert wird.

5. Vorrichtung nach Anspruch 4, **dadurch gekennzeichnet, dass** das defokussierende Element (8) Oberflächen aufweist, die ausgewählt aus einer Gruppe umfassend zueinander planparallele, plankonvexe, plankonkave, bikonvexe und bikonkave gestaltete Oberflächen sind.

6. Vorrichtung nach Anspruch 5, **dadurch gekennzeichnet, dass** das defokussierende Element (8) in einer Halterung (10) gehaltert ist, deren Gestaltung ein wiederholtes, reversibles und reproduzierbares Einbringen in den Strahlengang des Strahlenbündels (3) ermöglicht.

7. Vorrichtung nach Anspruch 5, **dadurch gekennzeichnet, dass** das defokussierende Element (8) mit einer mechanischen Vorrichtung (12) verbunden ist, durch die das defokussierende Element (8) reversibel in den Strahlengang des Strahlenbündels (3) eingebracht werden kann.

8. Vorrichtung nach einem der Ansprüche 4 bis 7, **dadurch gekennzeichnet, dass** in dem Strahlengang ein defokussierendes Element (8) vorhanden ist, das aus einer Gruppe von defokussierenden Elementen (8) ausgewählt ist, von denen jedes den Durchmesser (5.2) des Strahlenbündels (3) auf der Stirnfläche (6.1) der optischen Faser (6) um einen bestimmten Wert vergrößert.
